# FASCICULE DE BREVET EUROPEEN

(11) **EP 0 356 338 B1**
(45) Date de publication et mention de la délivrance du brevet: **15.12.1993**
(21) Numéro de dépôt: 89402335.7
(22) Date de dépôt: 24.08.1989
(51) Int. Cl.: B01D 11/02, C11B 9/02

(54) **Procédé d'extraction au solvant notamment de matières solides et appareillage pour sa mise en oeuvre**
Verfahren und Vorrichtung zur Lösungsmittelextraktion, besonders von festen Stoffen
Method and device for the solvant extraction especially of solids

(30) Priorité: 26.08.1988 FR 8811246
(43) Date de publication de la demande: 28.02.1990
(73) Titulaire: BIOLANDES TECHNOLOGIES Société Anonyme dite:, F-40420 Labrit (FR)
(72) Inventeur: Coutiere, Dominique, F-40420 Labrit (FR)
(74) Mandataire: Rinuy, Santarelli

(56) Documents cités:
- EP-A- 0 159 910
- DE-A- 1 805 426
- DE-A- 3 033 729
- DE-C- 854 495
- DE-C- 878 043
- GB-A- 176 104
- US-A- 2 752 377
- US-A- 4 458 494
- PARFUMS, COSMETIQUES, AROMES, no. 73, fevrier-mars 1987, Paris (FR); pp. 63-66#

## Description

L'invention concerne un procédé d'extraction au solvant, notamment d'extraction de matières solides à l'aide d'un solvant organique et se rapporte particulièrement à de unités devant fonctionner en continu dans les conditions d'exploitation qui suivent :
- grande variété des matières à extraire
- nombreux solvants différents
- très nombreuses campagnes successives mettant en oeuvre des associations solvant/soluté différentes, chaque campagne étant de courte durée.
- qualification réduite du personnel de conduite.

L'invention concerne également l'appareillage permettant la mise en oeuvre du procédé.

La demande de brevet EP-A-0 159 910 décrit un procédé de séparation solide-liquide classique et un appareillage pour la séparation par refroidissement et centrifugation de la partie paraffinique, sous forme de cristaux ou de particules solides, d'une huile de lubrification.

Le brevet US-A-4 458 494 concerne un procédé de séparation gaz-liquide par centrifugation, dans lequel un mélange est projeté dans une chambre à grande vitesse pour provoguer un effet de vortex par l'intermédiaire d'un conduit de section transversale décroissant graduellement envoyant tangentiellement le mélange dan un tube à double paroi refroidi.

La technique habituellement utilisée pour effectuer la séparation du solvant est celle de la distillation fractionnée qui fait appel à une colonne à distiller munie de plateaux ou de garnissage, un condenseur de vapeur de tête de colonne et éventuellement un échangeur rebouilleur de fond de colonne. En fonction des caractéristiques du couple solvant/soluté et de chacun des composants du couple, il y a modification de caractéristiques fondamentales de la colonne à distiller telles que :
- hauteur d'alimentation de la charge fraîche
- type de garnissage
- nombre de plateaux.

Le traitement de très nombreux couples solvant/soluté contraint l'industriel à disposer d'un matériel de distillation fractionnée très sophistiqué avec de multiples possibilités de réglage, de démontage et de modification afin de pouvoir faire face à la gamme étendue de ses conditions de fonctionnement.

L'industriel doit de plus avoir à sa disposition un personnel de haute qualification apte à mener à bien les réglages, démontages et modifications devant intervenir entre chaque campagne.

Enfin, pour limiter l'impact sur l'exploitation du coût et de la longueur de ces phases de réglage, démontage et modifications, l'industriel cherchera à allonger la durée des campagnes sur un même couple solvant/soluté en prenant éventuellement des risques de dégradation des produits de base ou des produits intermédiaires stockés en attente de traitement.

La demanderesse a cherché à éviter ces inconvénients par
- un procédé de mise en oeuvre simple autorisant l'utilisation de matériel facile à réaliser
- une flexibilité d'utilisation reposant sur la modification des valeurs de consigne des variables de contrôle du procédé plutôt que sur la configuration de l'installation mettant en oeuvre le procédé
- une automatisation facile du fonctionnement grâce au fonctionnement en continu et à la reproductibilité des variables de contrôle.

La présente invention concerne donc un procédé d'extraction au solvant dans lequel un solvant chargé d'un soluté moins volatil est vaporisé en vue de sa séparation, caractérisé en ce que le courant de solvant vaporisé contenant du soluté moins volatil sous forme de gouttelettes est soumis à une séparation dans un dispositif de séparation centrifuge dont la paroi interne est refroidie thermostatiquement.

Selon un mode de mise en oeuvre avantageux de l'invention, le dispositif de séparation centrifuge prévu pour ce procédé est un cyclone à paroi interne refroidie thermostatiquement.

L'invention concerne également l'appareillage correspondant à la mise en oeuvre de ce procédé.

L'invention concerne également un appareillage pour la mise en oeuvre du procédé ci-dessus décrit caractérisé en ce qu'il comprend un échangeur thermique assurant la vaporisation et un cyclone à paroi interne apte à être refroidie thermostatiquement, recevant les vapeurs de solvant contenant des gouttelettes du soluté.

Selon le principe de l'invention on vaporise le couple solvant/soluté sans précaution particulière ce qui donne naissance à une phase gazeuse riche en solvant où se trouvent des gouttelettes fines de soluté, et, lorsque la vaporisation est partielle, également à une phase liquide riche en soluté contenant encore une certaine portion de solvant. La phase gazeuse est ensuite soumise à un effet de centrifugation permettant, dans les conditions spécifiées plus haut, la récupération des gouttelettes fines de soluté et le solvant organique ainsi purifié est par la suite condensé.

Comme indiqué plus haut le procédé de l'invention est particulièrement approprié à l'extraction de matières solides, notamment d'origine végétale ou animale, pour lesquelles il est très intéressant de pouvoir disposer d'une technique d'extraction rapidement et facilement adaptable aux différents couples solvant/soluté.

En fait, ce procédé s'applique parfaitement aux séparations de solvant mises en oeuvre dans l'industrie pharmaceutique, cosmétique et/ou alimentaire et intervenant dans le cas d'isolement de produits d'origine naturelle ou dans le cas de synthèse chimique ou biochimique.

De ce point de vue il s'applique particulièrement bien à l'extraction des huiles essentielles qui nécessite, en fonction des matières premières dont on dispose, une grande adaptabilité de la technique d'extraction utilisée.

Ce procédé permet également, même pour les séparations n'impliquant pas un changement fréquent du couple solvant/soluté, de disposer d'une technique facile à mettre en oeuvre par un personnel de qualification moyenne.

L'invention sera mieux comprise à la lecture de la description qui suit d'un exemple de réalisation d'une extraction d'huiles essentielles et en se référant aux dessins annexés sur lesquels :
La figure 1 représente le schéma d'ensemble du procédé.
La figure 2 représente une réalisation de l'appareil de séparation centrifuge.

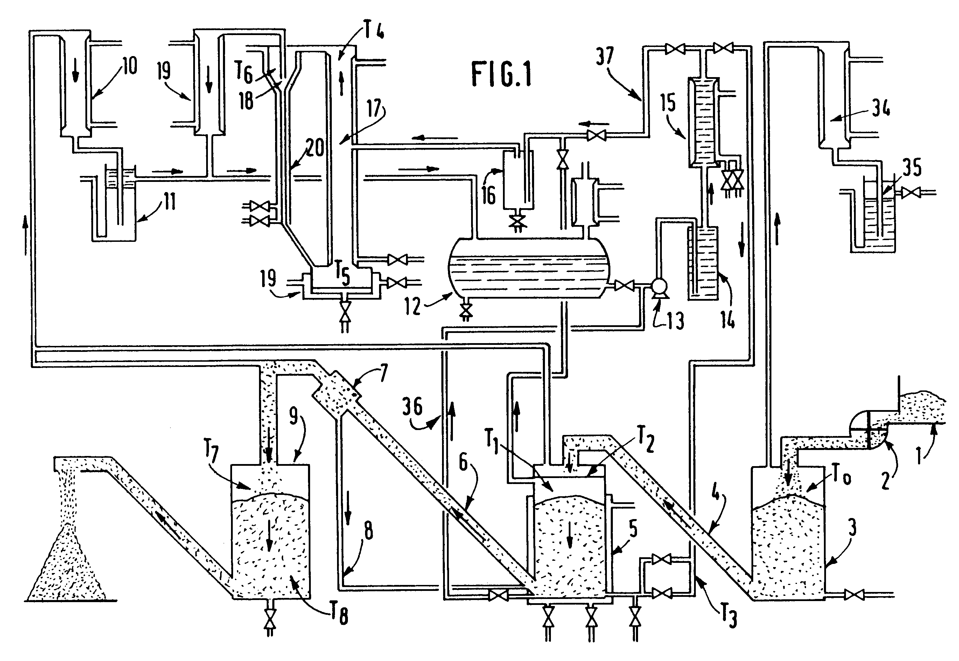

En référence à la figure 1, la matière végétale fraîche broyée de manière appropriée est soutirée d'une trémie de stockage (1) par un dispositif de convoyage (2) afin d'alimenter de manière continue et réglable une cuve de prétraitement à la vapeur (3). Ce prétraitement à la vapeur peut être une hydrolyse, c'est-à-dire un maintien à une température inférieure à 100°C de la masse de matière végétale contenue dans la cuve (3) par injection de la quantité de vapeur appropriée, ou une hydro-distillation, c'est-à-dire une distillation par entraînement à la vapeur des fractions volatiles libérées par la masse de matière végétale contenue dans la cuve (3). C'est ce dernier cas qui est illustré par la figure 1 où la cuve (3) a été représentée avec son circuit pour recueillir les vapeurs de tête qui sont condensées dans le condenseur (34), le liquide résultant étant séparé dans le séparateur (35) en une phase aqueuse d'une part et en huile essentielle d'autre part. La matière végétale prétraitée est extraite de manière continue et réglable de la cuve (3) par un dispositf de convoyage (4) afin d'alimenter une cuve d'extraction au solvant (5) où elle parvient par la partie supérieure. Du solvant frais prélevé dans la cuve (12) et mis sous pression grâce à la pompe (13) est filtré au moyen du filtre (14) et porté à la température appropriée grâce à l'échangeur (15) avant d'être injecté au fond de la cuve d'extraction à double enveloppe (5); L'échangeur (15) peut être alimenté par ailleurs soit par de la vapeur soit par de l'eau froide et fonctionner donc soit en réchauffeur, soit en refroidisseur du solvant. La matière végétale transite dans la cuve d'extraction (5) de haut en bas, à contre courant du solvant d'extraction circulant de bas en haut. La matière végétale épuisée est soutirée de la cuve d'extraction (5) de manière continue et réglable par un dispositif de convoyage (6) alimentant une presse mécanique (7). Cette presse mécanique (7) permet de récupérer une fraction de solvant qui contient du soluté, ce qui augmente le rendement de l'opération d'extraction. Cette fraction est dirigée vers la cuve d'extraction (5) par la conduite (8). Après passage dans la presse mécanique (7), la matière végétale épuisée entre dans une cuve de soufflage (9) où est effectué un balayage à la vapeur ayant pour effet de vaporiser le solvant résiduel. Le mélange gazeux vapeur d'eau/solvant est dirigé vers un condenseur (10) qui permet de recueillir un mélange liquide eau-solvant, lequel subit une séparation gravitaire dans le décanteur (11) la fraction solvant étant recyclée vers la cuve à solvant (12), la fraction aqueuse étant rejetée. Après soufflage, la matière végétale épuisée extraite de la cuve (9) est stockée et constitue un résidu éventuellement valorisable, notamment par combustion. Le solvant frais ayant pénétré dans la cuve (5) et circulant à contre-courant de la matière végétale est soutiré dans la partie supérieure de la cuve (5) par débordement après qu'il ait rempli sa fonction d'extraction et se trouve ainsi chargé en huiles essentielles en solution. La cuve (5) est disposée en élévation de façon que le solvant soit soutiré à une hauteur statique suffisante pour que la pression ainsi disponible permette au solvant de passer au travers du filtre (16) avant d'être injecté dans l'échangeur vertical (17) chauffé à la vapeur afin d'y subir une vaporisation partielle. La phase vapeur ainsi obtenue, qui contient une forte proportion de solvant entrainant une suspension de fines gouttelettes de soluté, est dirigée vers le cyclone (18) où les gouttelettes se trouvent plaquées sur la paroi extérieure par effet centrifuge, le solvant purifié ressortant du cyclone (18) par sa tubulure de tête afin d'être dirigé vers le condenseur (19) où il est récupéré à l'état liquide, pour être dirigé ensuite vers la cuve de stockage (12) afin d'être recyclé.

Les gouttelettes de soluté plaquées sur la paroi du cyclone (18) ruissellent sur cette paroi malgré la viscosité du soluté grâce à l'effet de paroi froide obtenu par la double enveloppe dont est muni le cyclone (18), laquelle double enveloppe est refroidie à l'eau.Cet effet de paroi froide provoque la condensation d'une quantité très faible de solvant qui suffit en effet à entraîner le soluté récupéré par centrifugation. Cette fraction solvant/soluté très riche en soluté est réunie à la base du cyclone (18) pour être dirigée vers le récipient (19) au travers de la tuyauterie (20) qui est munie d'une double enveloppe afin de contrôler l'écoulement. Le récipient (19) recueille principalement la fraction non vaporisée dans l'échangeur (17) du mélange solvant/soluté injecté dans ce même échangeur (17). Cette fraction non vaporisée est donc très riche en soluté. Ce récipient (19) est muni d'un moyen de chauffage à la vapeur, serpentin ou double-enveloppe, permettant l'ajustement du contenu résiduel en solvant du produit final, par évaporation complémentaire d'une faction de ce solvant.Afin de produire dans les meilleures conditions certains concentrés d'huiles essentielles ou concrètes qui sont très fragiles, le récipient (19) peut être chauffé selon le principe du bain-marie par un liquide baignant la paroi extérieure du récipient (19) ledit liquide étant maintenu à la température requise par exemple en y immergeant un serpentin alimenté avec de la vapeur. Le concentré d'huiles essentielles ou concrète est extrait par la tubulure de fond du récipient (19) de manière semi-continue. La vitesse d'écoulement de cette concrète étant souvent très faible, ce soutirage peut avantageusement être réalisé par aspiration grâce à une prise de vide disposée sur la tubulure du fond du récipient (19).

En fin d'opération de traitement d'une matière végétale spécifique, le récipient (5) est vidé par la tuyauterie (36) dans le réservoir (12). Le solvant est purifié de tout soluté résiduel par circulation, grâce à la pompe (13), au travers du filtre (14) et de l'échangeur (15) puis directement à l'échangeur (17) par la tuyauterie (37) pour être vaporisé. Le solvant purifié est recueilli à la sortie de l'échangeur (19) avant de retourner au réservoir (12).

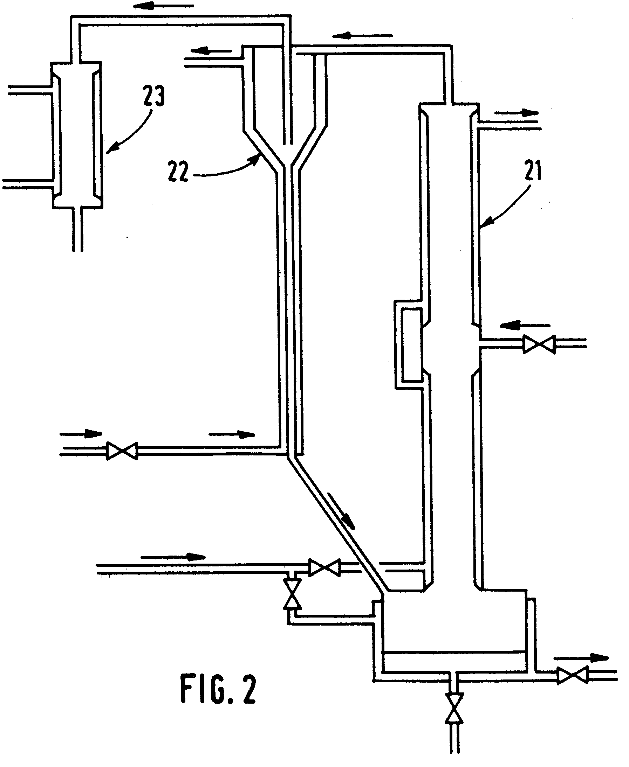

Un moyen préféré de réalisation de l'appareillage permettant la mise en oeuvre du procédé selon l'invention est donné par la description suivante et par référence à la figure 2.

L'échangeur tubulaire (21) recevant la charge fraîche est disposé verticalement et possède des plaques tubulaires intermédiaires afin de pouvoir installer l'alimentation de charge fraîche approximativement à mi-hauteur. La partie inférieure de l'échangeur constitue une chambre d'accumulation pour permettre la collecte de la fraction organique. Cette partie inférieure est munie d'un serpentin interne. La partie supérieure est munie d'une tubulure de vapeur qui relie l'échangeur (21) au cyclone (22). Le cyclone (22) reçoit les vapeurs issues de l'échangeur (21). Il est réalisé de manière à ce que la température de la totalité de sa paroi circonférentielle puisse être contrôlée par admission d'eau dans une double enveloppe. Une tuyauterie relie le fond du cyclone (22) au fond de l'échangeur (21). Une autre tuyauterie relie la partie supérieure du cyclone (22) à un condenseur (23) de réalisation standard.

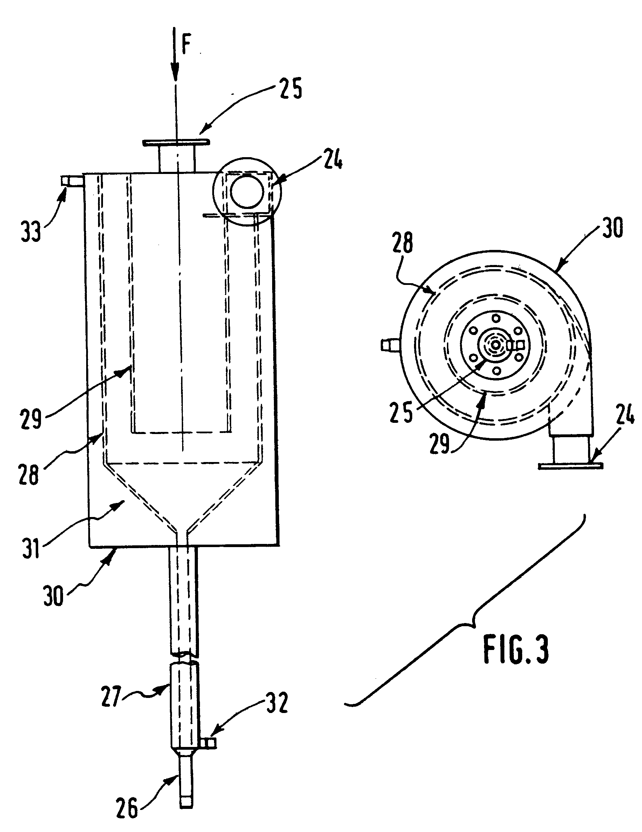

Le détail de la construction du cyclone est repris par la figure 3 où sont représentées respectivement :
- la tubulure (24) d'arrivée du mélange vapeur de solvant/gouttelettes de soluté,
- la tubulure (25) de sortie du solvant purifié,
- la tubulure (26) de récupération du mélange soluté/solvant et sa double enveloppe (27),
- la paroi périphérique (28) du cyclone et sa cheminée (29) de désengagement vapeur,
- la double enveloppe (30) du cyclone ménageant un volume libre au contact de la paroi périphérique (28) du cyclone permettant de thermostater cette dernière,
- les tubulures (32) et (33) permettant l'alimentation et l'évacuation du fluide caloporteur utilisé pour thermostater la paroi du cyclone.

La conduite de l'ensemble tel que décrit par la figure 1 peut se détailler comme suit :
- Le débit de matière végétale à traiter par l'installation dans sa totalité est contrôlé par action sur le dispositif de convoyage (2).
- Les caractéristiques et résultats attendus du prétraitement à la vapeur de la matière végétale sont contrôlés par la quantité de vapeur admise dans la cuve (3) et la température de celle-ci fournie par la sonde T_{O}.

S'il s'agit d'un prétraitement d'hydrolyse à la vapeur, la température T_{O} prise dans l'atmosphère surmontant la matière végétale dans le récipient (3) sera typiquement maintenue voisine de 80°C et ceci par action sur la vanne d'injection de vapeur dans le récipient (3).

S'il s'agit d'un prétraitement d'hydrodistillation la température T_{O} est sans action, et le débit de vapeur injecté dans le récipient (3) est fixé en fonction de la matière végétale traitée et du débit de traitement.
- Les caractéristiques et résultats obtenus par l'extraction au solvant effectuée dans la cuve (5) sont dépendant de :
   - la température du solvant pendant l'extraction donnée par la sonde T1, laquelle est contrôlée par la quantité de calories apportées ou enlevées à la cuve (5) grâce à la double enveloppe de celle-ci
   - la température du solvant frais, donnée par la sonde T₃, laquelle est contrôlée au moyen de la marche de l'échangeur (15)
- La récupération du solvant résiduel dans la matière végétale épuisée est contrôlée par les températures données par les sondes T₈ et T₇. T₈ est placé au fond de la cuve (9) dans la matière végétale, et contrôle l'épuisement en solvant de celle-ci. La température indiquée est très peu inférieure à 100°C. T₇ est placé dans l'atmosphère vapeur de la cuve (9) et rend compte de la proportion solvant/vapeur d'eau dans ce mélange gazeux.
- La vitesse de la phase gazeuse pénétrant dans le cyclone (18) est contrôlée par ajustement du débit liquide de la pompe (13), lequel débit est celui de mélange solvant/soluté admis dans l'échangeur (17), en association avec le réglage de la quantité vaporisée dans l'échangeur (17) qui, elle, dépend de la chaleur apportée à cet échangeur (17) donc de la quantité de vapeur fournie à cet échangeur (17). Une variable représentative du fonctionnement de l'échangeur (17) est la température de la vapeur sortant en tête de cet échangeur (17) fourni par la sonde T₄. Si le débit de solvant varie, la température T₄ varie aussi et corrige en conséquence le débit de vapeur alimentant l'échangeur (17).
- La température de la paroi périphérique du cyclone **(18)** est contrôlée grâce à la quantité d'eau de refroidissement envoyée dans la double enveloppe de celui-ci d'après les indications de la sonde de température T6. Cette température de paroi est typiquement légèrement inférieure à celle de vaporisation du solvant.
- La température du produit final contenu dans le récipient (19) est contrôlée par ajustement de la quantité de vapeur admise dans le serpentin dont il est muni et grâce aux indications de la sonde de température T5. Elle varie en fonction du solvant et de la fragilité du produit recueilli.

La température T₂ donnée par la sonde située dans l'atmosphère gazeuse de la cuve (5) est une sécurité qui arrête l'installation au cas où la température de vaporisation du solvant utilisé est atteinte.

La concentration en soluté dans le solvant soutiré de la cuve (5) est typiquement comprise entre O,2 % et 2 %.

La concentration en solvant résiduel du produit final soutiré du récipient (19) est typiquement de 35 à 60%.

On voit donc qu'il est possible de contrôler toutes les variables de fonctionnement du procédé grâce
- aux sondes de température To à T8, chacune agissant sur le ou les organes de régulation de débit de chauffage ou refroidissement lui correspondant,
- au débit de solvant alimentant la cuve (5),
- au débit de matière végétale fraîche alimentant la cuve de prétraitement (3).

L'ensemble de ces boucles de contrôle/régulation peut faire l'objet d'une automatisation pilotant les valeurs de consigne de chaque variable. Ces valeurs de consigne correspondent à des conditions de fonctionnement qui sont spécifiques pour chaque matière végétale traitée par un solvant donné, mais qui peuvent être gardées en mémoire par le système automatique. Cela rend alors possible un démarrage très rapide après chaque changement de matière végétale à traiter, la période d'ajustement des conditions de fonctionnement du procédé à la nouvelle matière végétale étant prise en charge par l'automate de régulation. Le pilotage du procédé étant réalisé grâce à un automate, celui-ci peut également accueillir certaines fonctions supplémentaires de surveillance telles que :
- niveau des cuves et trémies,
- soutirage final du produit,
- alarmes et sécurité de l'installation.

## Revendications

1. Procédé d'extraction au solvant dans lequel un solvant charge d'un soluté moins volatil est vaporisé en vue de sa séparation, caractérisé en ce que le courant de solvant vaporisé contenant du soluté moins volatil sous forme de gouttelettes est soumis à une séparation dans un dispositif de séparation centrifuge (18, 22) dont la paroi interne (28) est refroidie thermostatiquement.

2. Procédé selon la revendication 1, caractérisé en ce que la vaporisation réalisée est partielle et permet de recueillir, outre la phase solvant vaporisé chargé de gouttelettes de soluté, une phase liquide riche en soluté.

3. Procédé selon la revendication 2, caractérisé en ce que la phase liquide issue du séparateur centrifuge (18, 22) dont la paroi interne (28) est refroidie thermostatiquement est recueillie séparément.

4. Procédé selon la revendication 2, caractérisé en ce que la phase liquide issue du séparateur centrifuge (18, 22) est réunie avec la phase liquide reliquat de la vaporisation partielle et riche en soluté.

5. Procédé selon l'une quelconque des revendications 1 à 4, caractérisé en ce qu'il consiste en une extraction au solvant de matières solides.

6. Procédé selon la revendication 5, caractérisé en ce que le solvant est mis en circulation dans un appareil d'extraction fonctionnant en discontinu recevant les matières solides fraîches et dont sont soutirés le mélange solvant/soluté et les matières solides épuisées.

7. Procédé selon la revendication 5, caractérisé en ce que le solvant est mis en circulation dans un appareil (5) recevant en continu des matières solides fraîches et dont sont soutirés en continu le mélange solvant/soluté et les matières solides épuisées.

8. Procédé selon la revendication 6 ou 7, caractérisé en ce que les matières solides épuisées subissent un pressage mécanique (7) pour recueillir une fraction supplémentaire de mélange solvant/soluté.

9. Procédé selon l'une quelconque des revendications 6 à 8, caractérisé en ce que les matières solides épuisées subissent un soufflage (9) à la vapeur d'eau.

10. Procédé selon l'une quelconque des revendications 6 à 9, caractérisé en ce que les matières solides fraîches sont soumises préalablement à l'extraction au solvant à un traitement à la vapeur d'eau.

11. Procédé selon la revendication 10, caractérisé en ce que le traitement préalable à la vapeur d'eau est une hydrodistillation.

12. Procédé selon la revendication 1 pour la production d'huiles essentielles à partir de matière végétale, caractérisé en ce qu'il comporte les étapes suivantes :
a) la matière végétale préalablement broyée est soumise à un traitement préalable à la vapeur d'eau,
b) la matière végétale prétraitée alimente en continu une cuve d'extraction où le solvant circule à contre-courant,
c) la matière végétale épuisée est extraite en continu de la cuve d'extraction (5) pour subir un pressage mécanique (7) en produisant une quantité supplémentaire de mélange solvant-huiles essentielles,
d) la matière végétale épuisée subit après pressage mécanique un soufflage (9) à la vapeur d'eau permettant de récupérer une quantité supplémentaire de solvant,
e) le mélange solvant-huiles essentielles est vaporisé partiellement,
f) la phase vapeur, contenant des gouttelettes de liquide, est soumise à une séparation dans un dispositif de séparation centrifuge (18, 22) à paroi interne (28) refroidie thermostatiquement,
g) la phase vapeur issue du dispositif de séparation centrifuge (18, 22), constituée en majeure partie de solvant, est condensée pour être recyclée,
h) la phase liquide, issue de la vaporisation partielle, riche en huiles essentielles et contenant peu de solvant, est recueillie au pied de l'échangeur (17, 21) dans un récipient (19) thermostaté,
i) la phase liquide, issue du dispositif de séparation centrifuge (18, 22), riche en huiles essentielles et contenant peu de solvant, est dirigée vers le récipient (19) thermostaté situé au pied de l'échangeur (17, 21) par une canalisation thermostatée,
j) la température de la phase liquide riche en huiles essentielles est contrôlée de manière à ajuster la teneur résiduelle en solvant du produit final.

13. Procédé selon l'une quelconque des revendications 1 à 12, caractérisé en ce que le fonctionnement en est contrôlé par des températures mesurées par des sondes (T) agissant automatiquement sur la régulation des moyens de chauffage et de refroidissement d'une part et par les débits de solvant et de matière à extraire d'autre part, l'ensemble des valeurs de consigne pour chaque couple matière à extraire/solvant étant tenu en mémoire par un automate.

14. Appareillage pour la mise en oeuvre du procédé selon l'une des revendications 1 à 13, caractérisé en ce qu'il comprend un échangeur thermique (21) assurant la vaporisation et un cyclone (18, 22) à paroi interne apte à être refroidie thermostatiquement, recevant les vapeurs de solvant contenant des gouttelettes du soluté .

15. Appareillage selon la revendication 14 caractérisé en ce que l'échangeur thermique (17, 21) est disposé de façon que la circulation du liquide et de la vapeur s'y effectue verticalement.

16. Appareillage selon la revendication 14 ou 15, caractérisé en ce que l'échangeur thermique (17, 21) est du type tubulaire.

17. Appareillage selon les revendications 15 et 16, caractérisé en ce que le faisceau tubulaire de l'échangeur thermique (17, 21) est séparé en deux parties par une chambre où s'effectue l'alimentation en mélange frais solvant/soluté.

18. Appareillage selon l'une quelconque des revendication 14 à 17, caractérisé en ce que l'échangeur (17,21) possède à sa partie inférieure un récipient de collecte (19) de la fraction liquide.

19. Appareillage selon la revendication 18, caractérisé en ce que la chambre de collecte (19) est munie d'une surface d'échange thermique.

20. Appareillage selon la revendication 18, caractérisé en ce que la chambre de collecte (19) est réalisée de manière à ce que son fond et éventuellement une partie de sa paroi latérale puissent baigner dans un liquide dont la température est contrôlée.

21. Appareillage selon l'une des revendications 14 à 20, caractérisé en ce que la réalisation du cyclone (18, 22) est de type à double enveloppe.

## Claims

1. Extraction process using a solvent, in which a solvent loaded with a less volatile solute is vaporised in order to separate it, characterised in that the flow of vaporised solvent containing less volatile solute in the form of droplets is subjected to separation in a centrifugal separation device (18, 22), the inner wall (28) of which is cooled thermostatically.

2. Process according to Claim 1, characterised in that the vaporisation carried out is partial and makes it possible to collect, in addition to the vaporised solvent phase loaded with droplets of solute, a liquid phase with a high solute content.

3. Process according to Claim 2, characterised in that the liquid phase coming from the centrifugal separator (18, 22), the inner wall (28) of which is thermostatically cooled, is collected separately.

4. Process according to Claim 2, characterised in that the liquid phase coming from the centrifugal separator (18, 22) is combined with the liquid phase with a high solute content remaining from the partial vaporisation.

5. Process according to any one of Claims 1 to 4, characterised in that it consists of a solvent extraction of solid materials.

6. Process according to Claim 5, characterised in that the solvent is circulated in a batch extraction apparatus receiving the fresh solid materials and from which the solvent/solute mixture and spent solid materials are drawn off.

7. Process according to Claim 5, characterised in that the solvent is circulated in an apparatus (5) continuously receiving fresh solid materials and from which the solvent/solute mixture and spent solid materials are drawn off continuously.

8. Process according to Claim 6 or 7, characterised in that the spent solid materials undergo mechanical pressing (7) in order to collect an additional amount of solvent/solute mixture.

9. Process according to any one of Claims 6 to 8, characterised in that the spent solid materials are subjected to blowing (9) with steam.

10. Process according to any one of Claims 6 to 9, characterised in that the fresh solid materials are subjected to steam treatment prior to solvent extraction.

11. Process according to Claim 10, characterised in that the prior steam treatment is hydrodistillation.

12. Process according to Claim 1 for the production of essential oils from vegetable matter, characterised in that it includes the following steps:
a) the previously crushed vegetable matter is subjected to preliminary steam treatment,
b) the pretreated vegetable matter continuously feeds an extraction tank in which the solvent circulates in the reverse direction,
c) the spent vegetable matter is continuously drawn off the extraction tank (5) in order to be subjected to mechanical pressing (7) producing an additional quantity of a mixture of solvent and essential oils,
d) the spent vegetable matter undergoes, after mechanical pressing, steam blowing (9) enabling an additional quantity of solvent to be recovered,
e) the mixture of solvent and essential oils is partially vaporised,
f) the vapour phase, containing droplets of liquid, is subjected to separation in a centrifugal separation device (18, 22) with a thermostatically cooled inner wall (28),
g) the vapour phase coming from the centrifugal separation device (18, 22), consisting mainly of solvent, is condensed and recycled,
h) the liquid phase coming from the partial vaporisation, which contains a high proportion of essential oils and little solvent, is collected at the base of the exchanger (17, 21) in a thermostatically controlled vessel (19),
i) the liquid phase coming from the centrifugal separation device (18, 22), which contains a high proportion of essential oils and little solvent, is directed to the thermostatically controlled vessel (19) situated at the base of the exchanger (17, 21) through a thermostatically controlled pipe,
j) the temperature of the liquid phase containing a high proportion of essential oils is controlled so as to adjust the residual solvent content of the final product.

13. Process according to any one of Claims 1 to 12, characterised in that its operation is controlled by means of temperatures measured by probes (T) acting automatically on the regulation of the heating and cooling means on the one hand and by means of the flow rates of the solvent and of the material to be extracted on the other hand, all the reference values for each pair consisting of a material to be extracted and a solvent being held in memory by an automatic controller.

14. Apparatus for implementing the process according to Claims 1 to 13, characterised in that it comprises a heat exchanger (21) providing vaporisation and a cyclone (18, 22) with an inner wall suitable for being cooled thermostatically, receiving the solvent vapours containing droplets of solute.

15. Apparatus according to Claim 14, characterised in that the heat exchanger (17, 21) is disposed so that the liquid and vapour flow vertically therein.

16. Apparatus according to Claim 14 or 15, characterised in that the heat exchanger (17, 21) is of the tubular type.

17. Apparatus according to Claims 15 and 16, characterised in that the bundle of tubes in the heat exchanger (17, 21) is separated into two parts by a chamber where the mixture of fresh solvent and solute is fed in.

18. Apparatus according to any one of Claims 14 to 17, characterised in that the exchanger (17, 21) has, at its lower part, a vessel (19) for collecting the liquid fraction.

19. Apparatus according to Claim 18, characterised in that the collecting chamber (19) has a heat exchange surface.

20. Apparatus according to Claim 18, characterised in that the collection chamber (19) is constructed so that its bottom and optionally part of its side wall is able to be immersed in a liquid, the temperature of which is controlled.

21. Apparatus according to one of Claims 14 to 20, characterised in that the cyclone (18, 22) is of the doublewalled type.

## Patentansprüche

1. Verfahren zur Lösungsmittelextraktion, bei welchem ein mit einem weniger flüchtigen, gelösten Stoff beladenes Lösungsmittel im Hinblick auf seine Abtrennung verdampft wird, dadurch gekennzeichnet, daß der Strom des verdampften Lösungsmittels, das den Weniger flüchtigen, gelösten Stoff in Form von Tröpfchen enthält, einer Trennung in einer Zentrifugentrenneinrichtung (18, 22), deren Innenwand (28) thermostatisch gekühlt wird, unterworfen wird.

2. Verfahren nach Anspruch 1, dadurch gekennzeichnet, daß die durchgeführte Verdampfung partiell ist und es ermöglicht, außer der mit Tröpfchen des gelösten Stoffes beladenen, verdampften Lösungsmittelphase eine an gelöstem Stoff reiche Flüssigkeitsphase zu gewinnen.

3. Verfahren nach Anspruch 2, dadurch gekennzeichnet, daß die Flüssigkeitsphase, die aus der Zentrifugentrenneinrichtung (18, 22), deren Innenwand (28) thermostatisch gekühlt wird, austritt, getrennt gewonnen wird.

4. Verfahren nach Anspruch 2, dadurch gekennzeichnet, daß die Flüssigkeitsphase, die aus der Zentrifugentrenneinrichtung (18, 22) austritt, mit der verbleibenden und an gelöstem Stoff reichen Flüssigkeitsphase der partiellen Verdampfung vereinigt wird.

5. Verfahren nach einem der Ansprüche 1 bis 4, dadurch gekennzeichnet, daß es aus einer Lösungsmittelextraktion von Feststoffen besteht.

6. Verfahren nach Anspruch 5, dadurch gekennzeichnet, daß das Lösungsmittel in einer diskontinuierlich arbeitenden Extraktionseinrichtung, welche frische Feststoffe empfängt und aus welcher das Gemisch Lösungsmittel/gelöster Stoff und die erschöpften Feststoffe abgezogen werden, in Zirkulation versetzt wird.

7. Verfahren nach Anspruch 5, dadurch gekennzeichnet, daß das Lösungsmittel in einer Apparatur (5), welche kontinuierlich frische Feststoffe empfängt und aus welcher das Gemisch Lösungsmittel/gelöster Stoff und die erschöpften Feststoffe kontinuierlich abgezogen werden, in Zirkulation versetzt wird.

8. Verfahren nach Anspruch 6 oder 7, dadurch gekennzeichnet, daß die erschöpften Feststoffe einem mechanischen Pressen zur Gewinnung einer zusätzlichen Fraktion von Lösungsmittel/ gelöstem Stoff unterworfen werden.

9. Verfahren nach einem der Ansprüche 6 bis 8, dadurch gekennzeichnet, daß die erschöpften Feststoffe einem Blasvorgang mit Wasserdampf unterworfen werden.

10. Verfahren nach einem der Ansprüche 6 bis 9 dadurch gekennzeichnet, daß die frischen Feststoffe vor der Lösungsmittelextraktion einer Wasserdampfbehandlung unterzogen werden.

11. Verfahren nach Anspruch 10, dadurch gekennzeichnet, daß die Vorbehandlung mit Wasserdampf eine Wasserdampfdestillation ist.

12. Verfahren nach Anspruch 1 zur Gewinnung von essentiellen Ölen aus Pflanzenmaterial, dadurch gekennzeichnet, daß es folgende Stufen umfaßt:
a) zuvor zerkleinertes Pflanzenmaterial wird einer Vorbehandlung mit Wasserdampf unterzogen,
b) das vorbehandelte Pflanzenmaterial speist kontinuierlich einen Extraktionstank, worin das Lösungsmittel im Gegenstrom zirkuliert,
c) das erschöpfte Pflanzenmaterial wird kontinuierlich aus dem Extraktionstank (5) herausgenommen, um einem mechanischen Pressen (7) unter Produktion einer zusätzlichen Menge des Gemisches Lösungsmittel-essentielle Öle unterworfen zu werden,
d) das erschöpfte Pflanzenmaterial erfährt nach dem mechanischon Pressen eine Blasbehandlung (9) mit Wasserdampf, welche die Gewinnung einer zusätzlichen Menge von Lösungsmittel erlaubt,
e) das Gemisch Lösungsmittel-essentielle Öle wird partiell verdampft.
f) die Dampfphase, enthaltend Tröpfchen der Flüssigkeit, wird einer Trennung in einer Zentrifugentrenneinrichtung (18, 22) mit thermostatisch gekühlter Innenwand (28) unterworfen,
g) die aus der Zentrifugentrenneinrichtung (18, 22) austretende, zum größeren Teil aus Lösungsmittel bestehende Dampfphase wird zum Rückführen kondensiert,
h) die aus der partiellen Verdampfung austretende, an essentiellen Ölen reiche und wenig Lösungsmittel enthaltende Flüssigkeitsphase wird am Fuß des Tauschers (17, 21) in einem thermostatisierten Behälter (19) aufgefangen,
i) die aus der Zentrifugentrenneinrichtung (18, 22) austretende, an essentiellen Ölen reiche und wenig Lösungsmittel enthaltende Flüssigkeitsphase wird zu dem thermostatisierten, am Fuß des Tauschers (17, 21) angeordneten Behälter (19) durch eine thermostatisierte Leitung geleitet,
j) die Temperatur der an essentiellen Ölen reichen Flüssigkeitsphase wird derart eingeregelt, daß der Restgehalt an Lösungsmittel des Endproduktes eingestellt wird.

13. Verfahren nach einem der Ansprüche 1 bis 12, dadurch gekennzeichnet, daß sein Funktionieren einerseits durch mittels Sonden (T) gemessene Temperaturen, die automatisch auf die Regelung der Heiz- und Kühleinrichtungen einwirken, und andererseits durch die Durchsätze an Lösungsmittel und zu extrahierendem Material gesteuert wird, wobei die Gesamtheit der Sollwerte für jedes Paar zu extrahierendes Material/ Lösungsmittel durch einen Rechner gespeichert wird.

14. Vorrichtung zur Durchführung des Verfahrens nach einem der Ansprüche 1 bis 13, dadurch gekennzeichnet, daß sie einen die Verdampfung sicherstellenden Wärmetauscher (21) und ein Cyclon (18, 22) mit Innenwand, welche thermostatisch gekühlt werden kann und welche die Tröpfchen des gelösten Stoffes enthaltenden Lösungsmitteldämpfe aufnimmt, umfaßt.

15. Vorrichtung nach Anspruch 14, dadurch gekennzeichnet, daß der Wärmetauscher (17, 21) derart angeordnet ist, daß die Zirkulation von Flüssigkeit und von Dampf hierin senkrecht erfolgen.

16. Vorrichtung nach Anspruch 14 oder 15, dadurch gekennzeichnet, daß der Wärmetauscher (17, 21) vom Röhrentyp ist.

17. Vorrichtung nach Anspruch 15 und 16, dadurch gekennzeichnet, daß das Rohrbündel des Wärmetauschers (17, 21) in zwei Teile durch eine Kammer unterteilt ist, worin die Versorgung mit dem Gemisch frisches Lösungsmittel/gelöster Stoff erfolgt.

18. Vorrichtung nach einem der Ansprüche 14 bis 17, dadurch gekennzeichnet, daß der Tauscher (17, 21) in seinem unteren Teil einen Sammelbehälter (19) für die Flüssigkeitsfraktion besitzt.

19. Vorrichtung nach Anspruch 18, dadurch gekennzeichnet, daß die Sammelkammer (19) mit einer Wärmetauscheroberfläche ausgestattet ist.

20. Vorrichtung nach Anspruch 18, dadurch gekennzeichnet, daß die Sammelkammer (19) derart ausgeführt ist, daß ihr Boden und eventuell ein Teil ihrer Seitenwände in einer Flüssigkeit eintauchen können, deren Temperatur geregelt wird.

21. Vorrichtung nach einem der Ansprüche 14 bis 20, dadurch gekennzeichnet, daß die Ausführung des Cyclons (18, 22) vom Doppelmanteltyp ist.
